# FASCICULE DE BREVET EUROPEEN

(11) **EP 2 839 412 B1**
(45) Date de publication et mention de la délivrance du brevet: **14.09.2016**
(21) Numéro de dépôt: 13715688.1
(22) Date de dépôt: 11.04.2013
(51) Int. Cl.: G06K 19/077

(54) **PROCEDE DE MARQUAGE DE MODULE DE CARTE A PUCE PAR GRAVURE**
VERFAHREN ZUR MARKIERUNG EINES CHIPKARTENMODULS DURCH ÄTZEN
METHOD FOR MARKING A CHIP CARD MODULE BY ETCHING

(30) Priorité: 17.04.2012 FR 1201138
(43) Date de publication de la demande: 25.02.2015
(73) Titulaire: Linxens Holding, 78280 Guyancourt (FR)
(72) Inventeur: DE MAQUILLE, Yannick, F-78100 Saint-Germain-en-Laye (FR); HOVEMAN, Bertrand, F-95610 Eragny-sur-Oise (FR); DIEU-GOMONT, Séverine, F-78270 Limetz-Villez (FR); PROYE, Cyril, F-78200 Magnanville (FR)
(74) Mandataire: GIE Innovation Competence Group
(86) Numéro de dépôt international: PCT/EP2013/057575
(87) Numéro de publication internationale: WO 2013/156382

(56) Documents cités:
- EP-A1- 1 249 787
- FR-A1- 2 695 234
- FR-A1- 2 859 870

## Description

L'invention concerne le marquage d'indications sur un connecteur de carte à puce ou plus généralement sur un aménagement de face de module électronique de carte à puce destiné à venir affleurer de manière découverte en surface de la carte.

L'invention trouve une application particulièrement avantageuse dans le marquage des cartes bancaires, cartes SIM - Subscriber Identification Module en anglais - ou encore cartes d'identité, passeports, cartes de santé, notamment pour y inscrire un message de sécurité ou une identification du fabricant.

Une carte à puce comporte un module qui se présente typiquement sous la forme d'une couche diélectrique portant sur une face un composant électronique, i.e. la puce, et, sur une autre face, un connecteur électrique constitué par des contacts métalliques le plus souvent en cuivre recouverts d'une couche de nickel, d'or ou de palladium. Le module est logé dans une cavité aménagée dans l'épaisseur de la carte de manière à laisser accessibles de l'extérieur les contacts métalliques.

Il existe un besoin de personnaliser l'aspect d'un tel connecteur de carte à puce. Ce besoin est esthétique et sécuritaire.

Esthétiquement, le connecteur constitue en lui-même une surface assez étendue et largement exposée à l'oeil de l'utilisateur, qui est avantageusement mise à profit pour exposer une marque esthétique ou une distinction ornementale.

En termes sécuritaires, les cartes à puce sont particulièrement exposées à un risque de falsification, consistant à extraire un module existant de la carte à puce et à le remplacer par un module pirate apte à produire une réponse malveillante à un lecteur associé. Un autre type de falsification peut consister au contraire à placer une puce authentique au sein d'une carte dont les inscriptions sont falsifiées afin de rendre cette carte capable de répondre adéquatement à un lecteur électronique de contrôle.

On a proposé plusieurs techniques pour marquer un tel module, et plus précisément le connecteur d'un tel module.

Ainsi, on a proposé dans le document DE 195 23 242 de graver une inscription dans le connecteur afin de laisser apparaître la couche diélectrique au fond de l'inscription. Un tel marquage présente une qualité esthétique limitée et se prête mal au marquage d'indications élaborées.

On a également proposé, dans le document FR 2 695 234, de graver des indications dans l'épaisseur des contacts électriques à l'aide d'un faisceau laser. Ce document mentionne également la possibilité de marquer le connecteur par dépôt d'une couche d'encre sur les éléments métalliques du connecteur. Un tel procédé de marquage s'insère mal dans un cycle de fabrication habituel du connecteur ou du module, et s'avère couteux à mettre en oeuvre.

Enfin, on a proposé dans le document US 6 259 035 de réaliser des dépôts de métaux différents sur des zones distinctes du connecteur. Ce procédé reste toutefois limité en termes esthétiques et en termes d'accroche entre les différentes couches déposées.

Ainsi, un but de l'invention est de proposer un procédé de marquage d'indications sur un connecteur de carte à puce électronique, qui, tout en n'introduisant aucune perturbation dans l'aptitude au contact électrique lui-même, permette un résultat esthétique de qualité, soit facilement mis en oeuvre dans un processus industriel de fabrication des connecteurs, et présente une fiabilité particulière en termes de solidité.

Ce but est atteint selon l'invention grâce à procédé de marquage d'un aménagement de face de module électronique de carte à puce, l'aménagement de face comportant une couche métallique de base, le procédé de marquage comprenant l'étape consistant à graver la couche métallique de base dans une zone révélant un motif de marquage, la gravure étant réalisée sur une épaisseur partielle de la couche métallique de base et le procédé comportant une étape ultérieure à l'étape de gravure sur une épaisseur partielle laquelle étape ultérieure consiste à recouvrir la couche métallique de base d'une couche métallique de revêtement laquelle couche métallique de revêtement recouvre ladite zone gravée révélant un motif de marquage.

Avantageusement, l'étape de gravure réalisée sur une épaisseur partielle de la couche métallique de base est réalisée par gravure chimique.

Avantageusement, la gravure est réalisée sur une profondeur qui est comprise entre 5 et 10 micromètres.

Avantageusement, l'aménagement de face est un connecteur de module électronique de carte à puce.

Avantageusement, le procédé comprend une étape de gravure chimique de microsillons séparant des plages composant des contacts électriques du connecteur et une étape préalable à cette étape de gravure chimique de microsillons consistant à mettre en place un masque protégeant de la gravure des zones distinctes des microsillons.

Avantageusement, la gravure d'une zone révélant un motif de marquage est une gravure chimique et le procédé comprend une étape préalable à l'étape de gravure de la zone révélant un motif de marquage laquelle étape préalable consiste à mettre en place un masque sur des zones distinctes de la zone révélant un motif de marquage, le masque protégeant de la gravure les zones distinctes de la zone révélant un motif de marquage.

Avantageusement, l'étape de gravure chimique des microsillons et l'étape de gravure chimique de la zone révélant un motif de marquage sont des étapes distinctes de sorte que le masque mis en place préalablement à l'une des gravures est retiré avant que le masque préalable à l'autre des gravures soit mis en place.

Avantageusement, la couche de revêtement métallique est une couche d'un matériau compris dans le groupe constitué de l'or, du palladium, du nickel, de l'argent, d'un alliage composé d'au moins 50% en poids d'or, d'un alliage composé d'au moins 50% en poids de palladium, d'un alliage composé d'au moins 1% en poids de nickel, d'un alliage composé d'au moins 10% en poids d'argent.

L'invention concerne également un aménagement de face de module électronique de carte à puce, l'aménagement de face comportant une couche métallique de base gravée dans une zone révélant un motif de marquage, la gravure étant réalisée sur une épaisseur partielle de la couche métallique de base et l'aménagement de face comprenant une couche métallique de revêtement recouvrant la couche métallique de base, la couche métallique de revêtement recouvrant ladite zone gravée révélant un motif de marquage.

Avantageusement, l'aménagement de face constitue un connecteur de module électronique de carte à puce.

D'autres caractéristiques, buts et avantages de l'invention apparaitront à la lecture de la description détaillée qui va suivre, faite en référence aux figures annexées sur lesquelles :
- Les figures 1 à 3 représentent des étapes d'assemblage d'une couche diélectrique et d'une couche de cuivre selon un mode de réalisation de l'invention ;
- La figure 4 représente une étape de masquage de la couche de cuivre selon ce même mode de réalisation de l'invention ;
- Les figures 5 et 6 représentent des étapes de gravure de la couche de cuivre selon ce même mode de réalisation de l'invention ;
- La figure 7 représente une étape de mise en place d'un film photosensible selon ce même mode de réalisation de l'invention.
- La figure 8 représente une étape d'insolation de ce film photosensible ;
- La figure 9 représente un ensemble obtenu après développement et élimination de parties non insolées du film photosensible ;
- La figure 10 représente un ensemble obtenu après une étape de gravure partielle selon un même mode de réalisation de l'invention ;
- La figure 11 représente une étape de dépôt de couche de revêtement selon ce même mode de réalisation de l'invention.

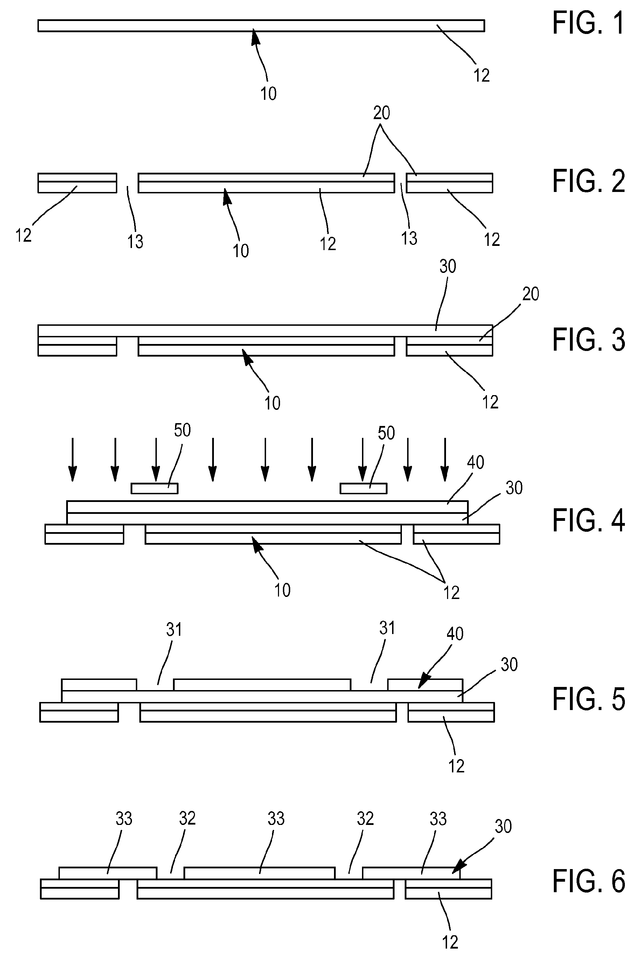

Les figures 1 à 6 représentent les étapes classiques d'un processus de production d'un connecteur de carte à puce. Selon une première étape, un support diélectrique 10 est fourni sous forme d'un film enroulée en bobine. Ce film diélectrique est ici un film de verre époxy mais peut en variante être constitué d'un autre matériau de nature diélectrique.

Une portion de film 12 est déroulée sans être séparée de la bobine. Tel que représenté à la figure 2, cette portion 12 du support diélectrique 10 subit un premier traitement qui consiste en l'application d'une couche de colle 20 puis en la réalisation de perforations 13 destinées au passage de liaisons électriques typiquement filaires.

A l'étape représentée à la figure 3, une couche de conduction 30 est apposée sur la couche de colle conductrice 20. La couche de conduction 30 est ici une couche de cuivre. La couche de cuivre est elle-même déroulée d'une bobine d'approvisionnement sans être à ce stade séparée de cette bobine.

L'ensemble formé de la couche diélectrique 10 et de la couche de cuivre 30 associées par la couche de colle 20 est ensuite laminé à chaud de manière à solidariser solidement ces deux couches.

L'ensemble obtenu après laminage est un feuilleté souple flexible qui peut être facilement enroulé en bobine, comme ce sera le cas après les étapes de préparation ultérieures décrites maintenant.

La figure 4 représente une étape suivante où un film photosensible 40 est apposé sur la couche de cuivre 30 formant couche métallique de base. Ce film photosensible 40 est également déroulé d'une bobine d'approvisionnement, non représentée, et apposé sur la couche de cuivre 30 sans être à ce stade séparé de cette bobine.

Ainsi, l'approvisionnement des couches diélectrique 10, de conduction 30 et de film photosensible 40 se font en déroulant des bobines d'approvisionnement respectives de sorte que l'assemblage de ces différentes couches se fait en continu.

L'étape suivante, également illustrée à la figure 4, consiste à insoler la couche photosensible 40 dans des zones choisies correspondant aux zones où l'on souhaite que la couche photosensible 40 reste en place. Cette insolation sélective est réalisée en utilisant un cache 50 correspondant aux zones ne devant pas être illuminées.

L'ensemble obtenu est ensuite photo-développé chimiquement puis plongé dans un bain de réactif lequel élimine la couche photosensible 40 dans ses zones n'ayant pas été préalablement insolées, les zones ayant été insolées résistant, elles, à ce bain de réactif.

L'ensemble obtenu est représenté à la figure 5, où la couche métallique de base constituée par la couche de cuivre 30 est à nu dans des zones choisies 31 tandis qu'elle est masquée par le film photosensible dans ses autres parties.

L'ensemble constitué de la couche diélectrique 12, de la couche de cuivre 30, du film photosensible ajouré 40 est alors soumis à une étape de gravure chimique ciblée sur la couche de cuivre 30. Cette gravure consiste à plonger l'ensemble dans un bain de réactif lequel entame la couche de cuivre 30 dans ses parties découvertes.

Le cuivre exposé au réactif est alors éliminé de la couche 30.

La couche photosensible ajourée est ensuite éliminée par application d'un réactif adapté, et l'on obtient l'ensemble représenté à la figure 6 consistant en une couche de cuivre laquelle est ajourée de manière sélective, ici selon un réseau de microsillons 32 formant séparations entre les contacts 33 formés par les parties restantes de la couche de cuivre 30.

On souhaite à présent réaliser un marquage de la couche de cuivre 30 dans ses portions restantes 33 afin de générer un marquage distinctif sur ces parties restantes.

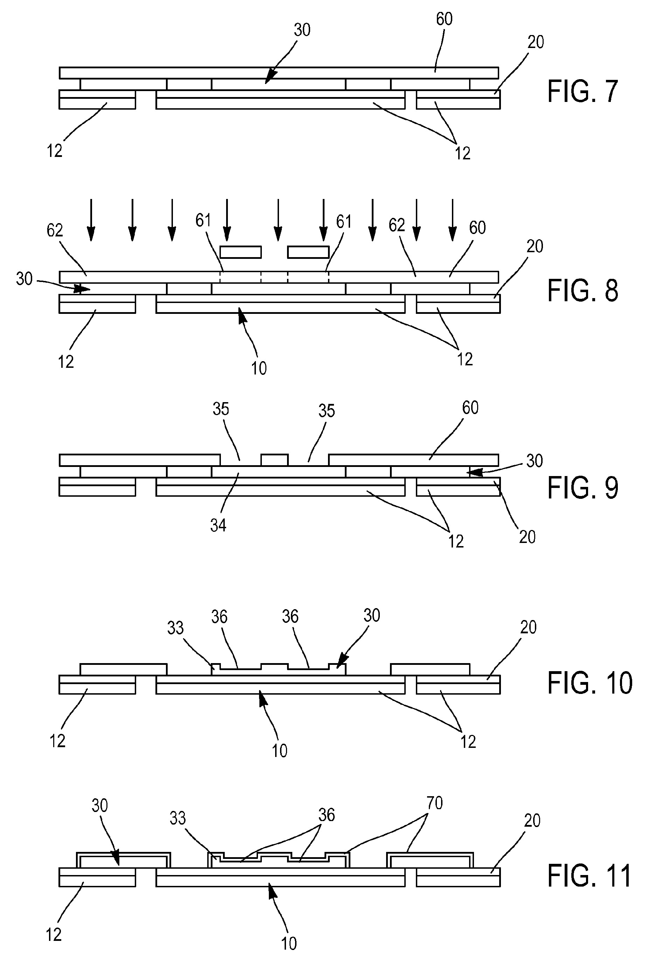

Un film photosensible semblable au film 40, maintenant référencé 60 sur la figure 7, est apposé sur la couche de cuivre 30.

Tel que représenté sur la figure 8, le film photosensible 60 est maintenant insolé dans une zone correspondant à la partie complémentaire du marquage souhaité. L'insolation est réalisée de manière sélective par utilisation d'un cache de forme correspondante.

La partie du film photosensible 60 qui correspond au marquage est référencée 61 sur la figure 8, tandis que la partie du film photosensible 60 qui correspondant à la partie complémentaire du marquage est référencée 62 sur la figure 8.

Après développement du film photosensible 60 et élimination des zones non exposées à la lumière de ce film 60, on obtient l'ensemble représenté à la figure 9. Une zone centrale 34 du connecteur se trouve exposée dans des parties 35 correspondant aux parties éliminées du film photosensible 60.

Le film photosensible 60 est ici un film sec, mais en variante une couche de matériau photosensible peut être déposée sous forme liquide sur la couche de cuivre 30, notamment sous forme d'une laque projetée sur la couche de cuivre, laquelle laque présente comme le film 60 une aptitude à être insolée puis développée pour être ensuite conservée partiellement selon les parties insolées.

Les zones exposées 35 de la couche de cuivre 30 sont maintenant soumises à un traitement apte à générer un marquage dont le motif correspond à ces zones exposées 35.

La réalisation du marquage consiste réaliser une étape de gravure chimique sur la couche de cuivre 30. De la même façon que pour l'étape de gravure décrite précédemment en référence à la figure 6, cette gravure consiste à plonger l'ensemble dans un bain de réactif.

On réalise une telle gravure sur une profondeur maitrisée de la couche de cuivre, ici une profondeur d'environ 5 à 15 micromètres.

Pour maitriser la profondeur de la gravure, une première méthode consiste à réaliser la gravure dans un bain de réactif classique en soi. La durée de présence de l'ensemble comprenant la couche de cuivre 30 dans ce bain de réactif est quant à elle paramétrée de telle sorte que l'action du réactif sur la couche de cuivre 30 disparaisse précisément lorsque la profondeur voulue est atteinte. Cette durée de présence dans le réactif, qui est variable selon la concentration du réactif, est facilement réglée pour obtenir la profondeur choisie. Pour une profondeur de 5 à 15 micromètres, une durée de présence dans un réactif de gravure chimique classique entre une dizaine de secondes et une minute permet d'obtenir une profondeur de gravure comprise idéalement entre 5 et 15 micromètres.

Une autre technique consiste à utiliser une durée de présence de la couche de cuivre dans un réactif de gravure chimique de nature classique en soi, à base de chlorure cuivrique, mais en concentration particulièrement faible, par exemple dans un bain à base de chlorure cuivrique ayant une concentration chimique en acide chlorhydrique inférieure à 100 grammes par litre, de sorte que les composants actifs du réactif de gravure ne permettent qu'une vitesse limitée de disparition des molécules de cuivre sur la durée de présence du cuivre dans le réactif. Cette vitesse de disparition du cuivre ne permet alors qu'une gravure de profondeur limitée pendant une durée de présence classique dans le réactif.

En réalisant une telle gravure sur une profondeur correspondant à une fraction seulement de l'épaisseur de la couche de cuivre, la zone gravée 36 conserve un fond matérialisé par la couche de cuivre 30 elle-même, ce qui permettra par la suite de déposer une couche de revêtement métallique à la fois sur la partie de la couche de cuivre formant le pourtour du marquage et à la fois sur la partie de la couche de cuivre formant le fond de la partie gravée, permettant de réaliser un marquage en creux selon une même couleur que la couleur d'ensemble du connecteur de la carte à puce. Une telle gravure selon une profondeur maitrisée permet en outre d'obtenir un marquage particulièrement esthétique, car présentant une certaine discrétion tout en produisant un contraste suffisant entre le marquage et son contour.

L'étape suivante consiste à éliminer la feuille de matériau photosensible 60. L'ensemble obtenu, représenté sur la figure 10, comporte une ou plusieurs plages continues 33 de la couche de cuivre 30 lesquelles présentent une ou des parties en creux 36, lesquelles parties en creux 36 forment ici le motif voulu.

Par exemple, la plage gravée 33 peut être une plage centrale du connecteur laquelle n'est destinée à venir en contact électrique avec aucune piste associée.

Le motif en creux présente néanmoins une tenue mécanique qui permet de le réaliser au moins partiellement sur des contacts destinés à coopérer avec des pistes associées d'un lecteur de carte.

Selon une étape de finition, on procède à un dépôt électrolytique d'une couche de revêtement métallique 70 sur la couche métallique de base formée par la couche de cuivre 30. La couche de revêtement métallique 70 vient recouvrir toutes les parties de cuivre apparentes, et en particulier le fond des parties gravées 36. Un tel ensemble obtenu après dépôt de la couche de revêtement métallique 70 est représenté à la figure 11. En variante, le dépôt de la couche de revêtement peut être précédé du dépôt d'une sous-couche de nickel.

Le métal utilisé pour la couche de revêtement métallique 70 est par exemple l'or, l'argent, le palladium, le nickel. La couche de revêtement métallique peut en variante être constituée d'un alliage composé d'au moins 50% en poids d'or, d'un alliage composé d'au moins 50% en poids de palladium, d'un alliage composé d'au moins 1% en poids de nickel, d'un alliage composé d'au moins 10% en poids d'argent. Le cuivre est ainsi protégé de la corrosion et des agressions mécaniques telles que griffures ou micro-poinçonnages.

Le motif gravé présente au final une continuité d'aspect avec le reste du connecteur, avec une légère nuance de reflet et de couleur due au fait que le matériau de revêtement se trouve en creux dans la zone gravée 36, cette légère nuance donnant au motif gravé un aspect proche de celui d'un hologramme.

On a décrit ici le marquage d'un motif par gravure de ce motif même. Néanmoins, en variante on réalise une gravure d'une zone complémentaire du motif à créer, de sorte que le motif apparait en surépaisseur par rapport à cette zone complémentaire gravée.

Bien que l'on ait décrit le marquage comme étant réalisé sur un connecteur de carte à puce, ce marquage peut plus généralement être réalisé sur un aménagement de face de module de carte à puce. Un tel aménagement de face est agencé pour être affleurant en surface de la carte, c'est-à-dire destiné à être découvert en surface de la carte. Un tel aménagement de face peut comporter des contacts électriques et peut dans une variante de l'invention ne comporter aucun contact électrique comme c'est le cas pour un aménagement de face destiné à un module associé à une antenne et qui, bien qu'affleurant, est utilisé pour un pur fonctionnement sans contact. Le marquage dans ce cas n'avoisine ni ne recouvre donc aucun contact électrique du module.

Le motif gravé ou en surépaisseur par rapport à une partie gravée est avantageusement un logo, mais peut également être une inscription d'information ou une décoration de quelconque nature. Le motif peut également être un motif d'authentification permettant de recannaitre le module par son aspect extérieur pour permettre à l'utilisateur de s'assurer de l'authenticité du module présent sur la carte, ce motif ayant également pour fonction de rendre le connecteur difficilement reproductible de manière non autorisée.

Parmi les indications pouvant être marquées sur le module, on peut citer une marque ou le nom du fabricant de la carte, de la banque émettrice de la carte ou encore de l'opérateur de téléphonie mobile émetteur de la carte SIM.

Une fois le marquage réalisé, on obtient un connecteur ou plus généralement un aménagement de face de module de carte à puce prêt à être assemblé à une puce.

Le connecteur ou plus généralement l'aménagement de face de module fait à ce stade partie d'une bande flexible liée à une bobine d'approvisionnement. Cette bande est enroulée à nouveau sous la forme d'une bobine destinée à être fournie à un atelier réalisant l'assemblage du connecteur ou plus généralement de l'aménagement de face avec une puce et réalisant la mise en place des modules ainsi assemblés dans des corps de carte.

## Revendications

1. Procédé de marquage d'un aménagement de face (10,20,30,70) de module électronique de carte à puce, l'aménagement de face comportant une couche métallique de base (30), le procédé de marquage comprenant l'étape consistant à graver la couche métallique de base (30) dans une zone (36) révélant un motif de marquage, la gravure étant réalisée sur une épaisseur partielle de la couche métallique de base (30) et le procédé comportant une étape ultérieure à l'étape de gravure sur une épaisseur partielle laquelle étape ultérieure consiste à recouvrir la couche métallique de base (30) d'une couche métallique de revêtement (70) laquelle couche métallique de revêtement recouvre ladite zone gravée (36) révélant un motif de marquage.

2. Procédé selon la revendication 1, **caractérisé en ce que** l'étape de gravure réalisée sur une épaisseur partielle de la couche métallique de base (30) est réalisée par gravure chimique.

3. Procédé selon la revendication 1 ou la revendication 2, **caractérisé en ce que** la gravure est réalisée sur une profondeur qui est comprise entre 5 et 15 micromètres.

4. Procédé selon l'une quelconque des revendications précédentes, **caractérisé en ce que** l'aménagement de face (10,20,30,70) est un connecteur (10,20,30,70) de module électronique de carte à puce.

5. Procédé selon la revendication précédente, **caractérisé en ce qu'**il comprend une étape de gravure chimique de microsillons (32) séparant des plages composant des contacts électriques du connecteur (10,20,30,70) et une étape préalable à cette étape de gravure chimique de microsillons (32) consistant à mettre en place un masque (40) protégeant de la gravure des zones distinctes (33) des microsillons (32).

6. Procédé selon l'une quelconque des revendications précédentes, **caractérisé en ce que** la gravure d'une zone (36) révélant un motif de marquage est une gravure chimique et le procédé comprend une étape préalable à l'étape de gravure de la zone (36) révélant un motif de marquage laquelle étape préalable consiste à mettre en place un masque (60) sur des zones distinctes de la zone (36) révélant un motif de marquage, le masque protégeant de la gravure les zones distinctes de la zone (36) révélant un motif de marquage.

7. Procédé selon la revendication 5 en combinaison avec la revendication 6, **caractérisé en ce que** l'étape de gravure chimique des microsillons (32) et l'étape de gravure chimique de la zone (36) révélant un motif de marquage sont des étapes distinctes de sorte que le masque (40,60) mis en place préalablement à l'une des gravures est retiré avant que le masque (40,60) préalable à l'autre des gravures soit mis en place.

8. Procédé selon l'une quelconque des revendications précédentes, **caractérisé en ce que** la couche de revêtement métallique (70) est une couche d'un matériau compris dans le groupe constitué de l'or, du palladium, du nickel, de l'argent, d'un alliage composé d'au moins 50% en poids d'or, d'un alliage composé d'au moins 50% en poids de palladium, d'un alliage composé d'au moins 1% en poids de nickel, d'un alliage composé d'au moins 10% en poids d'argent.

9. Aménagement de face (10,20,30,70) de module électronique de carte à puce, l'aménagement de face comportant une couche métallique de base (30) gravée dans une zone (36) révélant un motif de marquage, la gravure étant réalisée sur une épaisseur partielle de la couche métallique de base (30) et l'aménagement de face comprenant une couche métallique de revêtement (70) recouvrant la couche métallique de base (30), la couche métallique de revêtement (70) recouvrant ladite zone gravée (36) révélant un motif de marquage.

10. Aménagement de face (10,20,30,70) de module électronique de carte à puce selon la revendication précédente, **caractérisé en ce qu'**il constitue un connecteur de module électronique de carte à puce.

## Patentansprüche

1. Verfahren zur Markierung einer Frontanordnung (10, 20, 30, 70) eines elektronischen Chipkartenmoduls, wobei die Frontanordnung eine metallische Basisschicht (30) umfasst, wobei das Markierungsverfahren den Schritt umfasst, der darin besteht, die metallische Basisschicht (30) in eine Zone (36) zu ätzen, die ein Markierungsmotiv zeigt, wobei das Ätzen auf einer Teildicke der metallischen Basisschicht (30) durchgeführt wird, und wobei das Verfahren einen Schritt nach dem Schritt des Ätzens auf einer Teildicke umfasst, welcher nachfolgende Schritt darin besteht, die metallische Basisschicht (30) mit einer metallischen Überzugsschicht (70) zu bedecken, wobei die metallische Überzugsschicht die Ätzzone (36), die ein Markierungsmotiv zeigt, bedeckt.

2. Verfahren nach Anspruch 1, **dadurch gekennzeichnet, dass** der auf einer Teildicke der metallischen Basisschicht (30) durchgeführte Ätzschritt durch chemisches Ätzen durchgeführt wird.

3. Verfahren nach Anspruch 1 oder Anspruch 2, **dadurch gekennzeichnet, dass** das Ätzen auf einer Tiefe durchgeführt wird, die zwischen 5 und 15 Mikrometer beträgt.

4. Verfahren nach einem der vorhergehenden Ansprüche, **dadurch gekennzeichnet, dass** die Frontanordnung (10, 20, 30, 70) ein Stecker (10, 20, 30, 70) eines elektronischen Chipkartenmoduls ist.

5. Verfahren nach dem vorhergehenden Anspruch, **dadurch gekennzeichnet, dass** es einen Schritt des chemischen Ätzens von Mikrorillen (32), die Bereiche, die elektrische Kontakte des Steckers (10, 20, 30, 70) zusammensetzen, trennen, und einen diesem Schritt des chemischen Ätzens von Mikrorillen (32) vorhergehenden Schritt umfasst, der darin besteht, eine Maske (40), die von den Mikrorillen (32) getrennte Zonen (33) vor dem Ätzen schützt, anzubringen.

6. Verfahren nach einem der vorhergehenden Ansprüche, **dadurch gekennzeichnet, dass** das Ätzen einer Zone (36), die ein Markierungsmotiv zeigt, ein chemisches Ätzen ist, und dass das Verfahren einen dem Schritt des Ätzens der ein Markierungsmotiv zeigenden Zone (36) vorhergehenden Schritt umfasst, welcher vorhergehende Schritt darin besteht, eine Maske (60) auf von der ein Markierungsmotiv zeigenden Zone (36) getrennten Zonen anzubringen, wobei die Maske die von der ein Markierungsmotiv zeigenden Zone (36) getrennten Zonen vor dem Ätzen schützt.

7. Verfahren nach Anspruch 5 in Kombination mit Anspruch 6, **dadurch gekennzeichnet, dass** der Schritt des chemischen Ätzens von Mikrorillen (32) und der Schritt des chemischen Ätzens der ein Markierungsmotiv zeigenden Zone (36) getrennte Schritte sind, so dass die vor einem Schritt des Ätzens angebrachte Maske (40, 60) entfernt wird, bevor die Maske (40, 60) vor dem anderen der Schritte des Ätzens angebracht wird.

8. Verfahren nach einem der vorhergehenden Ansprüche, **dadurch gekennzeichnet, dass** die metallische Überzugsschicht (70) eine Schicht ist, die aus einem Material besteht, das in der Gruppe enthalten ist, die von Gold, Palladium, Nickel, Silber, einer Legierung, die zu mindestens 50 Gew.-% aus Gold besteht, einer Legierung, die zu mindestens 50 Gew.-% aus Palladium besteht, einer Legierung, die zu mindestens 1 Gew.-% aus Nickel besteht, einer Legierung, die zu mindestens 10 Gew.-% aus Silber besteht, gebildet ist.

9. Frontanordnung (10, 20, 30, 70) eines elektronischen Chipkartenmoduls, wobei die Frontanordnung eine metallische Basisschicht (30) umfasst, die in eine Zone (36), die ein Markierungsmotiv zeigt, geätzt ist, wobei das Ätzen auf einer Teildicke der metallischen Basisschicht (30) durchgeführt wird, und wobei die Frontanordnung eine metallische Überzugsschicht (70) umfasst, die die metallische Basisschicht (30) bedeckt, wobei die metallische Überzugsschicht (70) die Ätzzone (36), die ein Markierungsmotiv zeigt, bedeckt.

10. Frontanordnung (10, 20, 30, 70) eines elektronischen Chipkartenmoduls nach dem vorhergehenden Anspruch, **dadurch gekennzeichnet, dass** sie einen Stecker eines elektronischen Chipkartenmoduls darstellt.

## Claims

1. Method for marking a surface arrangement (10, 20, 30, 70) of a chip card electronic module, the surface arrangement comprising a metal base layer (30), the marking method comprising the step consisting in etching the metal base layer (30) in a region (36) revealing a marking pattern, the etching being carried out over a partial thickness of the metal base layer (30) and the method comprising a step subsequent to the step of etching over a partial thickness, which subsequent step consists in covering the metal base layer (30) with a metal coating layer (70), which metal coating layer covers the said etched region (36) revealing a marking pattern.

2. Method according to Claim 1, **characterized in that** the etching step carried out over a partial thickness of the metal base layer (30) is carried out by chemical etching.

3. Method according to Claim 1 or Claim 2, **characterized in that** the etching is carried out over a depth which lies between 5 and 15 micrometres.

4. Method according to any one of the preceding claims, **characterized in that** the surface arrangement (10, 20, 30, 70) is a chip card electronic module connector (10, 20, 30, 70).

5. Method according to the preceding claim, **characterized in that** it comprises a step of chemically etching microgrooves (32) separating tracks forming electrical contacts of the connector (10, 20, 30, 70) and a step prior to this step of chemically etching microgrooves (32), consisting in applying a mask (40) protecting regions (33) other than the microgrooves (32) against etching.

6. Method according to any one of the preceding claims, **characterized in that** the etching of a region (36) revealing a marking pattern is chemical etching, and the method comprises a step prior to the step of etching the region (36) revealing a marking pattern, which prior step consists in applying a mask (60) on regions other than the region (36) revealing a marking pattern, the mask protecting the regions other than the region (36) revealing a marking pattern against etching.

7. Method according to Claim 5 in combination with Claim 6, **characterized in that** the step of chemically etching the microgrooves (32) and the step of chemically etching the region (36) revealing a marking pattern are different steps, so that the mask (40, 60) applied before one of the etchings is removed before the mask (40, 60) prior to the other of the etchings is applied.

8. Method according to any one of the preceding claims, **characterized in that** the metal coating layer (70) is a layer of a material from the group consisting of gold, palladium, nickel, silver, an alloy composed of at least 50% by weight gold, an alloy composed of at least 50% by weight palladium, an alloy composed of at least 1% by weight nickel, an alloy composed of at least 10% by weight silver.

9. Surface arrangement (10, 20, 30, 70) of a chip card electronic module, the surface arrangement comprising a metal base layer (30) etched in a region (36) revealing a marking pattern, the etching being carried out over a partial thickness of the metal base layer (30) and the surface arrangement comprising a metal coating layer (70) covering the metal base layer (30), the metal coating layer (70) covering the said etched region (36) revealing a marking pattern.

10. Surface arrangement (10, 20, 30, 70) of a chip card electronic module according to the preceding claim, **characterized in that** it constitutes a chip card electronic module connector.
